# EUROPEAN PATENT APPLICATION

(11) **EP 4 510 416 A1**
(43) Date of publication of application: **19.02.2025**
(21) Application number: 22965435.5
(22) Date of filing: 15.11.2022
(51) Int. Cl.: H02J 7/00

(54) **DEVICE COMMUNICATION METHOD AND SYSTEM, AND ELECTRIC DEVICE, CHARGING DEVICE AND STORAGE MEDIUM**

(71) Applicant: Contemporary Amperex Technology Co., Limited, Ningde, Fujian 352100 (CN)
(72) Inventor: LI, Zhanliang, Ningde, Fujian 352100 (CN); LI, Haili, Ningde, Fujian 352100 (CN); HUANG, Shan, Ningde, Fujian 352100 (CN); YAN, Yu, Ningde, Fujian 352100 (CN); PAN, Xianxi, Ningde, Fujian 352100 (CN); DAN, Zhimin, Ningde, Fujian 352100 (CN); LI, Xiangtao, Ningde, Fujian 352100 (CN)
(74) Representative: Ran, Handong
(86) International application number: PCT/CN2022/131846
(87) International publication number: WO 2024/103243

(57) **Abstract**

Provided in the embodiments of the present application are a device communication method and system, and an electric device, a charging device and a storage medium. The method comprises: an electric device establishing a communication connection with a charging device; and the electric device performing a function negotiation with the charging device by means of the communication connection, wherein a service function for the function negotiation includes a charging/discharging function and/or a discharging function. By means of the present application, a charging device can provide more function modes, and a battery is charged, discharged, alternately charged and discharged, etc., by using a function which is settled by means of negotiation between the charging device and an electric device, such that requirements for battery charging or discharging in various application scenarios can be met.

## Description

### FIELD

The present disclosure relates to the technical field of batteries, and in particular, to a device communication method and system, an electric device, a charging device, and a storage medium.

### BACKGROUND

A charging device in the related art has a charging function and can charge a battery of an electric device. The charging function typically involves continuously charging the battery based on a request current of the battery until the battery reaches full capacity. However, aside from the charging function, the charging device cannot provide any other charging or discharging services. The charging device has a single function mode, which fails to satisfy the requirement of the electric device for charging or discharging the battery in more application scenarios.

### SUMMARY

Embodiments of the present disclosure provide a device communication method and system, an electric device, a charging device, and a storage medium, which adds a negotiation on a charging and discharging function and/or a discharging function during a function negotiation between the charging device and the electric device, thereby allowing more function modes to be provided by the charging device. Therefore, the requirement of the electric device for charging or discharging a battery in more application scenarios is met.

**In** a first aspect, an embodiment of the present disclosure provides a device communication method, applied in an electric device. The method includes: establishing a communication connection with a charging device; and performing a function negotiation with the charging device through the communication connection. A service function of the function negotiation includes a charging and discharging function and/or a discharging function.

In this embodiment, the charging device and the electric device perform the function negotiation including the charging and discharging function and/or the discharging function. Therefore, the charging device can provide more function modes, allowing for charging, discharging, or alternately charging and discharging of the battery by using a function that is consensually negotiated by both the charging device and the electric device, which can satisfy the requirement of the electric device for charging or discharging the battery in various application scenarios.

In some embodiments, said performing the function negotiation with the charging device includes: receiving a support function message transmitted by the charging device. The support function message includes a first function description code corresponding to the charging and discharging function and/or a second function description code corresponding to the discharging function.

In this embodiment, the support function message transmitted by the charging device includes a function description code of the charging and discharging function and/or a function description code of the discharging function, which improves a utilization rate of the support function message, thereby realizing a negotiation of the charging and discharging function and/or the discharging function based on the support function message.

In some embodiments, a reserved field of the support function message includes the first function description code and/or the second function description code.

In this embodiment, a frame structure of the support function message is provided with the reserved field. The charging device adds a function description code of a charging and discharging function and/or a function description code of a discharging function supported by itself in the reserved field without a need for modifying a communication protocol or the frame structure of the support function message, thereby improving the utilization rate and expandability of the support function message. Consequently, it becomes very convenient to add the negotiation on the charging and discharging function and/or the discharging function in a function negotiation stage.

In some embodiments, a reserved field corresponding to a power supply mode function module in the support function message includes the first function description code and/or the second function description code.

In this embodiment, the reserved field is provided for each function module in the frame structure of the support function message. The charging device directly adds the function description code of the charging and discharging function and/or the function description code of the discharging function in the reserved field corresponding to the power supply mode without the need for modifying the communication protocol or the frame structure of the support function message. Moreover, the support function message has excellent expandability. Therefore, it becomes very convenient to add the negotiation on the charging and discharging function and/or the discharging function during the function negotiation stage.

In some embodiments, said performing the function negotiation with the charging device includes: when the support function message includes the first function description code, determining, based on a value of the first function description code being a first value, that the charging device supports the charging and discharging function; or determining, based on the value of the first function description code being a second value, that the charging device does not support the charging and discharging function; and when the support function message includes the second function description code, determining, based on a value of the second function description code being a third value, that the charging device supports the discharging function; or determining, based on the value of the second function description code being a fourth value, that the charging device does not support the discharging function.

In this embodiment, the function description code of the charging and discharging function and/or the function description code of the discharging function is carried in the support function message, allowing the electric device to easily determine whether the charging device supports the charging and discharging function and/or the discharging function based on the value of the function description code. Therefore, efficiency of performing a negotiation on the charging and discharging function and/or the discharging function is enhanced.

In some embodiments, said performing the function negotiation with the charging device includes: selecting a target function from the charging and discharging function and/or the discharging function in response to determining that both the charging device and the electric device support the charging and discharging function and/or the discharging function; and carrying, in a negotiation confirmation result message returned to the charging device, a function description code corresponding to the target function.

In this embodiment, the negotiation confirmation result message carries the function description code of the charging and discharging function or the function description code of the discharging function. Subsequently, the charging device may use the charging and discharging function to charge a battery of the electric device after determining that the function negotiation is successful based on the negotiation confirmation result message, or switch to a discharging mode to receive a current discharged by the electric device, thereby providing the electric device with a function mode required by electric device, and meeting the requirements of the electric device for charging or discharging or discharging the battery.

In some embodiments, said selecting the target function from the charging and discharging function and/or the discharging function in response to determining that both the charging device and the electric device support the charging and discharging function and/or the discharging function includes: selecting the charging and discharging function as the target function when both the charging device and the electric device support the charging and discharging function.

In this embodiment, when the electric device determines that both the electric device itself and the charging device support the charging and discharging function, the electric device selects the charging and discharging function by default. In this way, subsequently, the charging device adopts the charging and discharging function to charge the battery of the electric device, and the charging and discharging function adds a discharging stage during charging, which can effectively decrease a lithium precipitation amount generated during the charging of the battery, thereby enhancing charging safety of the battery and prolonging a service life of the battery.

In some embodiments, said selecting the target function from the charging and discharging function and/or the discharging function in response to determining that both the charging device and the electric device support the charging and discharging function and/or the discharging function includes: when both the charging device and the electric device support the charging and discharging function, selecting the charging and discharging function as the target function in response to determining that battery power is lower than a predetermined threshold.

In this embodiment, when both the charging device and the electric device support the charging and discharging function, and battery power of the electric device is lower than the predetermined threshold, the first function description code of the charging and discharging function is carried in the negotiation confirmation result message. In this way, the charging and discharging function may be used for charging the battery of the electric device in a case where the battery power is low, and the discharging stage is added to the charging and discharging function during charging, which can efficaciously decrease the lithium precipitation amount generated during the charging of the battery. Therefore, the charging safety of the battery is improved, and the service life of the battery is prolonged.

In some embodiments, said selecting the target function from the charging and discharging function and/or the discharging function in response to determining that both the charging device and the electric device support the charging and discharging function and/or the discharging function includes: selecting the charging and discharging function as the target function in response to receiving a charging instruction and determining that both the charging device and the electric device support the charging and discharging function; and selecting the discharging function as the target function in response to receiving a discharging instruction and determining that both the charging device and the electric device support the discharging function.

In this embodiment, the charging and discharging function is selected in response to receiving the charging instruction, and the discharging function is selected in response to receiving the discharging instruction. Therefore, the service function is selected based on user's requirements, allowing a user to independently choose between the charging and discharging function and the discharging function provided by the charging device.

In some embodiments, the method further includes: when the negotiation confirmation result message indicates that the function negotiation is successful, charging a battery of the electric device through a charging and discharging circuit between the electric device and the charging device in response that the negotiation confirmation result message carries the first function description code; or, controlling the battery of the electric device to discharge to the charging device in response that the negotiation confirmation result message carries the second function description code.

In this embodiment, the charging and discharging function is determined, by means of the function negotiation confirmation, to be used to charge the battery of the electric device, which can effectively decrease the lithium precipitation amount during the charging of the battery, improve the charging safety of the battery, and prolong the service life of the battery. In an application scenario of determining to discharge the battery by means of the function negotiation, the charging device switches to the discharging mode to receive a current released by the battery, which facilitates rapid discharge of the battery. Moreover, electric energy released during the charging of the battery by using the charging and discharging function or the received electric energy that is released by the battery by using the discharging function may be fed back to the power grid or stored in an energy storage element of the charging device, which can avoid a case of wastage caused by releasing the electric energy.

In some embodiments, the method further includes: performing a function negotiation with the charging device when a version negotiation with the charging device is successful or unsuccessful.

In the case of a successful version negotiation, subsequent communication of the function negotiation may be performed by using a communication protocol in a version supported by both the charging device and the electric device, thereby ensuring that the electric device can parse the message transmitted by the charging device, allowing communication interaction between the electric device and the charging device to be smoothly performed. In a case where the version negotiation is unsuccessful, the function negotiation is also performed, which can decrease the likelihood of needing to reseek the charging device because of the unsuccessful version negotiation, ultimately improving a success rate of charging or discharging of the electric device, and making the charging or discharging of the electric device more handy.

In a second aspect, the embodiments of the present disclosure provide a device communication method, applied in a charging device. The method includes: establishing a communication connection with an electric device; and performing a function negotiation with the electric device through the communication connection. A service function of the function negotiation includes a charging and discharging function and/or a discharging function.

In this embodiment, the charging device and the electric device performs the function negotiation including the charging and discharging function and/or the discharging function. Therefore, the charging device is capable of providing more function modes, allowing for the charging, discharging, or alternately charging and discharging of the battery by using the function negotiated consistently by both the charging device and the electric device, which can satisfy the requirement of the electric device for charging or discharging the battery in a variety of application scenarios.

In some embodiments, said performing the function negotiation with the electric device includes: transmitting a support function message to the electric device. The support function message includes a first function description code corresponding to the charging and discharging function and/or a second function description code corresponding to the discharging function.

In this embodiment, the support function message transmitted by the charging device includes the function description code of the charging and discharging function and/or the function description code of the discharging function, which improves the utilization rate of the support function message, thereby realizing the negotiation of the charging and discharging function and/or the discharging function based on the support function message.

In some embodiments, said transmitting the support function message to the electric device includes: adding the first function description code and/or the second function description code at a reserved field of the support function message; and transmitting the support function message subsequent to the adding operation to the electric device.

In this embodiment, the frame structure of the support function message is provided with the reserved field. The charging device adds the function description code of the charging and discharging function and/or the function description code of the discharging function supported by charging device in the reserved field, without the need for modifying the communication protocol or the frame structure of the support function message, thereby improving the utilization rate and expandability of the support function message. Consequently, it becomes very convenient to add the negotiation on the charging and discharging function and/or the discharging function in the function negotiation stage.

In some embodiments, said adding the first function description code and/or the second function description code at the reserved field of the support function message includes: adding the first function description code and/or the second function description code at a reserved field corresponding to a power supply mode function module in the support function message.

In this embodiment, the reserved field is provided for each function module in the frame structure of the support function message. The charging device directly adds the function description code of the charging and discharging function and/or the function description code of the discharging function in the reserved field corresponding to the power supply mode, without the need for modifying the communication protocol or the frame structure of the support function message. Moreover, the support function message has excellent expandability. Therefore, it becomes very convenient to add the negotiation on the charging and discharging function and/or the discharging function during the function negotiation stage.

In some embodiments, said performing the function negotiation with the electric device includes: receiving a negotiation confirmation result message returned by the electric device; and determining whether the negotiation confirmation result message includes a function description code for indicating support for the charging and discharging function or the discharging function in response to determining that the function negotiation is successful based on the negotiation confirmation result message.

In this embodiment, the charging device determines whether the negotiation confirmation result message includes the first function description code or the second function description code, to determine whether to use the charging and discharging function to charge the battery of the electric device or to switch to the discharging mode to receive the electric energy discharged by the battery of the electric device based on the determination result.

In some embodiments, the method further includes: charging a battery of the electric device by using the charging and discharging function when the negotiation confirmation result message includes a first function description code for indicating support for the charging and discharging function; and switching to a discharging mode to receive a current released by the battery of the electric device when the negotiation confirmation result message includes a second function description code for indicating support for the discharging function.

In this embodiment, the charging and discharging function is determined, by means of the function negotiation confirmation, to be used to charge the battery of the electric device, which can effectively decrease the lithium precipitation amount during the charging of the battery, improve the charging safety of the battery, and prolong the service life of the battery. In the application scenario of determining to discharge the battery by means of the function negotiation, the charging device switches to the discharging mode to receive the current released by the battery, which facilitates the rapid discharge of the battery. Moreover, the electric energy released during the charging of the battery by using the charging and discharging function or the received electric energy that is released by the battery by using the discharging function may be fed back to the power grid or stored in the energy storage element of the charging device, which can avoid the case of wastage caused by releasing the electric energy.

In some embodiments, the method further includes: performing the function negotiation with the electric device when a version negotiation with the electric device is successful or unsuccessful.

In the case of the successful version negotiation, the subsequent communication of the function negotiation may be performed by using the communication protocol in the version supported by both the charging device and the electric device, thereby ensuring that the electric device can parse the message transmitted by the charging device, allowing the communication interaction between the electric device and the charging device to be smoothly performed. In the case where the version negotiation is unsuccessful, the function negotiation is also performed, which can decrease the likelihood of needing to reseek the charging device because of the unsuccessful version negotiation, ultimately improving the success rate of charging or discharging of the electric device, and making the charging or discharging of the electric device more handy.

In a third aspect, the embodiments of the present disclosure provide a device communication system, including: a charging device; and an electric device. The charging device establishes a communication connection with the electric device and performs a function negotiation with the electric device through the communication connection, and a service function of the function negotiation includes a charging and discharging function and/or a discharging function.

In a fourth aspect, the embodiments of the present disclosure provide an electric device, including: a memory; a processor; and a computer program stored in the memory and executable on the processor. The processor, when executing the computer program, implements the method as described in the first aspect.

In a fifth aspect, the embodiments of the present disclosure provide a charging device, including: a memory; a processor; and a computer program stored in the memory and executable on the processor. The processor, when executing the computer program, implements the method as described in the second aspect.

In a sixth aspect, the embodiments of the present disclosure provide a computer-readable storage medium, having a computer program stored thereon. The computer program, when executed by a processor, implements the method as described in the first aspect or the second aspect.

In a seventh aspect, the embodiments of the present disclosure provide a computer program product, including a computer program. The computer program, when executed by a processor, implements the method as described in the first aspect or the second aspect.

The above description is merely an overview of the technical solutions of the present disclosure. In order to more clearly understand the technical means of the present disclosure, to implement the technical solutions based on the content of the description and to clarify and explain the above and other objects, features, and advantages of the present disclosure, specific embodiments of the present disclosure will be further described in detail.

### BRIEF DESCRIPTION OF THE DRAWINGS

**In** order to clearly explain technical solutions according to the embodiments of the present disclosure, drawings used in the embodiments of the present disclosure are briefly described below. Obviously, the drawings described below are merely some embodiments of the present disclosure. Based on these drawings, other drawings can be obtained by those skilled in the art without inventive effort.
FIG. 1 is a schematic diagram of a charging pile in a charging connection with an electric vehicle according to an embodiment of the present disclosure.
FIG. 2 is a flowchart of a device communication method between an electric device and a charging device according to an embodiment of the present disclosure.
FIG. 3 is a schematic diagram of message interaction of a version negotiation and a function negotiation between a charging device and an electric device according to an embodiment of the present disclosure.
FIG. 4 is a schematic diagram of communication interaction for a function negotiation between a charging device and an electric device according to an embodiment of the present disclosure.
FIG. 5 is a schematic diagram of function modules for communication between a charging device and an electric device according to an embodiment of the present disclosure.
FIG. 6 is a schematic diagram of a device communication system according to an embodiment of the present disclosure.
FIG. 7 is a schematic structural diagram of a communication apparatus applied in an electric device according to an embodiment of the present disclosure.
FIG. 8 is a schematic structural diagram of a communication apparatus applied in a charging device according to an embodiment of the present disclosure.
FIG. 9 is a schematic structural diagram of an electric device according to an embodiment of the present disclosure.

### DETAILED DESCRIPTION

Implementations of the present disclosure are described in further detail below with reference to the accompanying drawings and embodiments. The following detailed description of the embodiments and the accompanying drawings are provided to illustrate the principles of the present disclosure and are not intended to limit the scope of the present disclosure, i.e., the present disclosure is not limited to the embodiments described.

In the description of the present disclosure, it should be noted that, unless otherwise specified, "a plurality of" means two or more; orientations or position relationships indicted by terms such as "upper", "lower", "left", "right", "in", "out", and the like, is only for the convenience of describing the present disclosure and simplifying the description, rather than indicating or implying that the associated device or element must have a specific orientation, or be constructed and operated in a specific orientation, and therefore cannot be understood as a limitation to the present disclosure. Furthermore, the terms "first", "second", "third", and the like are used for descriptive purposes only and are not to be construed as indicating or implying relative importance. "Vertical" is not vertical in the strict sense, but with a permissible error. "Parallel" is not parallel in the strict sense, but with a permissible error.

The orientation words appearing in the following description are directions shown in the drawings and do not limit the specific structure of the present disclosure. In the description of the present disclosure, it should also be noted that, unless expressly specified and limited otherwise, the terms "mounted", "connection", and "connected" are to be interpreted broadly, e.g., either fixedly or detachably, or integrally connected; may be directly connected or indirectly connected through an intermediary. For those of ordinary skill in the art, the specific meaning of the above-mentioned terms in the present disclosure can be understood according to specific circumstances.

At present, batteries are extensively applied to electric transportation means such as electric bicycles, electric motorcycles, and electric vehicles, and fields such as military equipment and aerospace. In these fields, an electric device typically provides power through a lithium battery. In some application scenarios, for the electric device, the battery needs to be charged or discharged.

In a case where battery power of the electric device is insufficient, the battery needs to be charged by a charging device. In the related art, the charging device (such as a charging pile) charges the battery by using its own charging function. For the lithium battery, lithium ions migrate from a positive electrode to a negative electrode during charging and are embedded into a negative electrode material, to complete a charging process. During one-way high-rate continuous charging, the lithium ions are gathered at the negative electrode, which not only limits a charging current, but also increases a risk of lithium precipitation of the battery through great-current continuous charging, resulting in a decrease in thermal stability of the negative electrode of the battery. Meanwhile, formed lithium dendrites may pierce a separator, leading to a short circuit between the positive and negative electrodes, thereby shortening a service life of the lithium battery and even triggering serious safety problems such as thermal runaway.

In a scenario where the battery needs to be discharged, the battery power is usually released to an electric load like an illumination system and a thermal management system of the electric device. The power released by the battery is consumed by operating the electric load. However, the electric load takes time to consume power. Therefore, it is difficult to achieve rapid discharge of the battery, easily resulting in a waste of electric energy.

Based on this, the inventors find that in the related art, the charging device provides a single function mode, which cannot satisfy requirements of the electric device for charging or discharging the battery in various application scenarios. The inventors consider that the function mode of the charging device may be changed, and some new function modes are added into the charging device to solve the problem in the related art of the single function mode of the charging device. The inventors designed to add a charging and discharging function and/or a discharging function into the charging device through deep research.

Here, the charging and discharging function refers to performing at least one charging stage and at least one discharging stage in a process of the charging device charging the battery, for example, periodically alternately charging and discharging the battery. By adding the discharging stage in the process of charging battery, lithium precipitated at the negative electrode of the lithium battery is reinserted, which decreases a lithium precipitation amount during charging of the battery, ultimately enhancing charging safety of battery, and prolonging the service life of the battery.

The discharging function is that the charging device may receive the power released by the battery of the electric device, so that the battery of the electric device can discharge quickly. Moreover, the released power can be returned to the power grid or stored in an energy storage element in the charging device. Subsequently, this part of power can recharge the battery, thus achieving a purpose of power conservation.

Based on the addition of the charging and discharging function and/or the discharging function in the charging device, the inventors of the present disclosure devise a device communication method. Through this method, the charging device performs a function negotiation, including the charging and discharging function and/or the discharging function, with the electric device, and can provide more function modes. In addition, the battery is charged, discharged, or alternately charged and discharged by adopting a function that is consensually negotiated by the charging device and the electric device, which can meet a requirement of the electric device for charging or discharging the battery in various application scenarios.

The device communication method provided in the embodiments of the present disclosure may be applied to any charging device and any electric device. The charging device may be a single-used charging device, such as a power bank, a charger, or the like. The charging device may be any charging device among a plurality of charging devices included in a charging system. The charging system may be a battery-swap station, a charging station, or a photovoltaic energy storage system. The charging device may be a charging pile, a charging and discharging machine, a charger, or the like. The electric device may be, but not limited to, an electric toy, an electric tool, an electric scooter, an electric vehicle, an electric ship, a spacecraft, and the like, that has a battery. The battery of the electric device may be a single battery cell, a battery module or a battery pack that is composed of a plurality of single battery cells. The charging device may perform communication interaction with any electric device by using the method provided in the embodiments of the present disclosure.

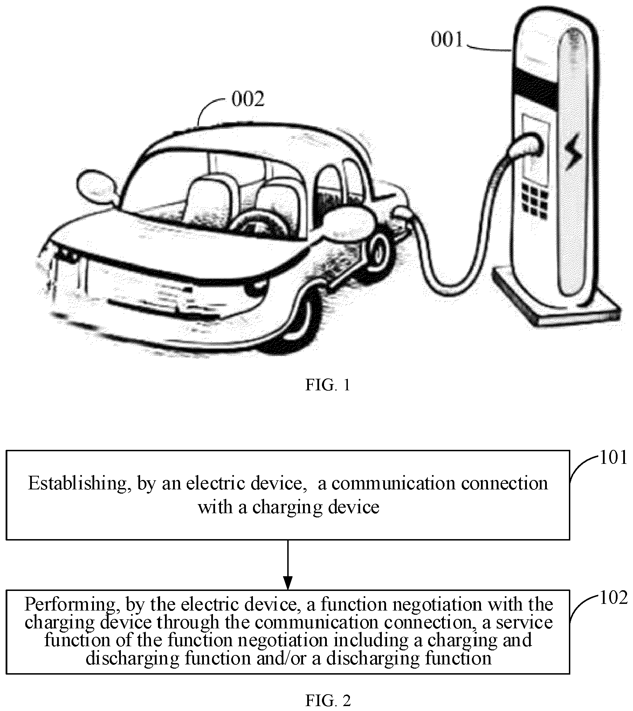

As an example, the charging pile is taken as the charging device, and the electric vehicle is taken as the electric device. FIG. 1 shows a schematic diagram of a charging pile 001 in connection with an electric vehicle 002. A charging gun of the charging pile 001 is inserted into a charging socket of the electric vehicle 002. Before a real electric energy transfer is generated between the charging pile 001 and the electric vehicle 002, a communication connection is established between the charging pile 001 and the electric vehicle 002, and a function negotiation is performed between the charging pile 001 and the electric vehicle 002 according to the communication method in the embodiments of the present disclosure.

Referring to a flowchart of the device communication method shown in FIG. 2, the method specifically includes actions at blocks 101 to 102.

At block 101, a communication connection is established by an electric device with a charging device.

The communication connection established between the electric device and the charging device may be a wireless connection or a wired connection. The wireless connection may be in a wireless communication manner such as WiFi, Bluetooth, or infrared. The wired connection may be a charging wire of the charging device in connection to a charging socket of the electric device, and a line for performing message interaction is provided in the charging wire.

Taking the electric vehicle and the charging pile as an example for description, the charging gun of the charging pile is inserted into the charging socket of the electric vehicle. After the electric vehicle detects that the charging gun is inserted into place, the electric vehicle uses the charging wire connected to the charging gun as a communication line to establish a communication connection with the charging pile. Alternatively, after detecting that the charging gun is inserted into place, the electric vehicle may establish a wireless communication connection with the charging pile in a wireless manner like Bluetooth or WiFi.

At block 102, a function negotiation is performed by the electric device with the charging device through the communication connection. A service function of the function negotiation includes a charging and discharging function and/or a discharging function.

A function negotiation process is to allow the electric device to identify a service function that the charging device is able to implement, determine whether the function negotiation performed by the electric device and the charging device is successful, and determine the service function of the charging device that needs to be used in the case of successful negotiation.

In some embodiments, the function negotiation may be performed after the communication connection is established between the electric device and the charging device. In some other embodiments, after the electric device establishes the communication connection with the charging device, first, a version negotiation is performed between the electric device and the charging device, and a version number of a communication protocol used for the current communication between the electric device and the charging device is determined by using the version negotiation. The electric device performs the function negotiation with the charging device in the case of the successful version negotiation.

In the above embodiments, the function negotiation is performed between the electric device and the charging device, and the charging device transmits the support function message to the electric device. The support function message includes a first function description code corresponding to the charging and discharging function and/or a second function description code corresponding to the discharging function.

The support function message includes a function code of a function module supported by the charging device and a function description code of a service function included in the function module. In some embodiments, the function module supported by the charging device at least includes a charging-system self-inspection function module and a pre-charging and energy transmission function module. The two function modules are function modules that must be supported by the charging device for battery charging. For the two function modules, the charging device supports at least one service function in each function module. The charging device may further support one or more of an authentication function module, a reservation function module, a power supply mode function module, or a charging end function module, other than the two function modules. For ease of description, in this embodiment of the present disclosure, the charging-system self-inspection function module and the pre-charging and energy transmission function module are referred to as affirmatively chosen item function modules, and the authentication function module, the reservation function module, the power supply mode function module, and the charging end function module are referred to as optional item function modules. In the function negotiation stage, when the electric device and the charging device both support at least one service function of a predetermined function module, negotiation succeeds for the function module. The function negotiation is successful only if negotiation succeeds for all the affirmatively chosen item function modules. When the negotiation fails for any of the affirmatively chosen item function modules, the function negotiation fails. Whether negotiation succeeds or not for the optional item function module does not affect a result of the function negotiation.

Here, one function module includes at least one service function, and includes a predetermined number of service functions at most. The predetermined number may be 8 or 10. Each service function has a function description code that is used to uniquely represent its corresponding service function.

In an implementation, the charging device encapsulates the function codes of all the function modules supported by the charging device and the function description codes of the corresponding service functions in the support function message, and transmits the function codes of all the function modules supported by the charging device and the function description codes of the corresponding service functions to the electric device in a single transmission through the support function message. In another implementation, the support function message may be a group of messages. Each message may include a function code of at least one function module and a function description code of a service function corresponding to the at least one function module. At least one message in the group of messages includes the first function description code corresponding to the charging and discharging function and/or the second function description code corresponding to the discharging function. The charging device and the electric device perform multiple times of communication interactions through the group of messages to complete the function negotiation process.

The support function message transmitted by the charging device includes the function description code of the charging and discharging function and/or the function description code of the discharging function, which improves a utilization rate of the support function message and realizes a negotiation of the charging and discharging function and/or the discharging function based on the support function message.

Specifically, the first function description code and/or the second function description code are added at a reserved field of the support function message, and then the support function message subsequent to the adding operation is transmitted to the electric device. The reserved field may be set at any position in a data field of a frame structure of the support function message, for example, located at a starting position, an end position, or an intermediate position of the data field. A byte length of the reserved field may be 48 bytes, 64 bytes, or the like.

When a newly added function module occurs in the charging device or a newly added service function occurs in a predetermined original function module, a function code of the newly added function module or a function description code of the newly added service function may be added at the reserved field. In this embodiment of the present disclosure, the charging device adds the first function description code of the charging and discharging function and/or the second function description code of the discharging function at the reserved field of the support function message.

For example, it is assumed that the reserved field is at an end position of a data field of the frame structure of the support function message, and the charging device newly adds the charging and discharging function, then the first function description code of the charging and discharging function is added at the reserved field. Moreover, it is assumed that the first function description code is FDC1=02, then the support function message after the addition of the first function description code may be as shown in Table 1. A message header records a source address, a destination address, and the like of the support function message. The source address may be a device serial number or a media access control (MAC) address of the charging device, and the like. The destination address is a device serial number or a MAC address of the electric device. The data field of the support function message includes the function codes of all the function modules supported by the charging device and the function description codes of the service functions. Function codes of all functions originally supported by the charging device and function description codes of service functions are recorded at a fixed field. The first function description code FDC1=02 of the charging and discharging function that is newly added by the charging device is recorded at the reserved field.

**Table 1**

| | | |
|---|---|---|
| Message header | Data field | |
| | Fixed field | Reserved field |
| | | FDC1=02 |

The reserved field is provided in the frame structure of the support function message, and the charging device adds the function description code of the charging and discharging function and/or the function description code of the discharging function supported by the charging device into the reserved field, without a need for modifying a communication protocol or the frame structure of the support function message, which improves the utilization rate and expandability of the support function message, and can add a negotiation on the charging and discharging function and/or the discharging function in the function negotiation stage very conveniently.

In some other embodiments, fields required for function description codes of the predetermined number of service functions are set for each function module in the support function message, and a length of the field corresponding to each function module may be 8 bytes or 12 bytes. When the number of service functions included in the specific function module is smaller than the predetermined number, a remaining part of the field corresponding to the function module will occur and is referred to as the reserved field of the function module.

The charging and discharging function and the discharging function may be service functions corresponding to the power supply mode function module. The charging device adds the first function description code of the charging and discharging function and/or the second function description code of the discharging function at the reserved field corresponding to the power supply mode function module in the support function message.

For example, it is assumed that the power supply mode may most include eight service functions, the original service functions of the power supply mode only include the charging function, and include the newly added charging and discharging function now. For the support function message as shown in Table 2, the function description code of each service function occupies one byte. Therefore, a field with an eight-byte length is provided for the power supply mode in the support function message. A function description code FDC0=01 of an original charging function occupies one byte, and a first function description code FDC1=02 of the newly added charging and discharging function occupies one byte. Function modules 1, 2, and N in Table 2 are each function modules supported by the charging device, and field length set for each of the function modules 1, 2, and N in the support function message is also 8 bytes.

**Table 2**

| | | | | | | | | | | | | |
|---|---|---|---|---|---|---|---|---|---|---|---|---|
| Message header | Function module 1 | Function module 2 | Power supply mode | | | | | | | | ...... | Function module N |
| | | | FDC0=01 | FDC1=02 | | | | | | | | |

For another example, as shown in Table 3, when two service functions including the charging and discharging function and the discharging function are newly added to the power supply mode of the charging device, the first function description code FDC1=02 of the charging and discharging function and the second function description code FDC2=03 of the discharging function are added to the reserved field of the power supply mode in the support function message.

**Table 3**

| | | | | | | | | | | | | |
|---|---|---|---|---|---|---|---|---|---|---|---|---|
| Message header | Function module 1 | Function module 2 | Power supply mode | | | | | | | | ...... | Function module N |
| | | | FDC0=01 | FDC1=02 | | | | | | | | |

In the frame structure of the support function message, each function module is provided with the reserved field, and the charging device directly adds the function description code of the charging and discharging function and/or the function description code of the discharging function in the reserved field corresponding to the power supply mode, without a need for modifying the communication protocol or the frame structure of the support function message. In addition, the support function message has excellent expandability. Therefore, it becomes convenient to add the negotiation on the charging and discharging function and/or on the discharging function into the function negotiation stage.

In this embodiment of the present disclosure, the first function description code of the charging and discharging function and/or the second function description code of the discharging function may be added in the corresponding reserved field of the support function message only when the charging device has the charging and discharging function and/or the discharging function. The support function message is received and parsed by the electric device. When identifying the first function description code from the support function message, the electric device determines that the charging device supports the charging and discharging function. When identifying the second function description code from the support function message, the electric device determines that the charging device supports the discharging function.

In some other embodiments of the present disclosure, the first function description code corresponding to the charging and discharging function and/or the second function description code corresponding to the discharging function may be set in the corresponding reserved field of the support function message. It is identified whether the charging and discharging function is supported by using different values of the first function description code and whether the discharging function is supported by using different values of the second function description code. In this embodiment of the present disclosure, when a value of the first function description code is a first value, it is indicated that the charging device supports the charging and discharging function. When the value of the first function description code is a second value, it is indicated that the charging device does not support the charging and discharging function. When a value of the second function description code is a third value, it is indicated that the charging device supports the discharging function. When the value of the second function description code is a fourth value, it is indicated that the charging device does not support the discharging function.

Here, the first value, the second value, the third value, and the fourth value are all pre-configured characters. The first value is used to indicate support for the charging and discharging function and may be 01, 02, etc. The third value is used to indicate support for the discharging function and may be 03 or 04. The second value is used to indicate that the charging and discharging function is not supported. The fourth value is used to indicate that the discharging function is not supported. The second value and the fourth value may be 0 or null.

After the charging device transmits the support function message including the first function description code and/or the second function description code, the electric device receives and parses the support function message. When parsing the first function description code of the charging and discharging function from the support function message, the electric device determines whether the charging device supports the charging and discharging function based on the value of the first function description code. That is, the electric device determines that the charging device supports the charging and discharging function based on the value of the first function description code being the first value. Alternatively, based on the value of the first function description code being the second value, the electric device determines that the charging device does not support the charging and discharging function. When parsing the second function description code of the discharging function from the support function message, the electric device determines whether the charging device supports the discharging function based on the value of the second function description code. That is, the electric device determines that the charging device supports the discharging function based on the value of the second function description code being the third value. Alternatively, the electric device determines that the charging device does not support the discharging function based on the value of the second function description code being the fourth value.

The function description code of the charging and discharging function and/or the function description code of the discharging function are carried in the support function message, which can enable the electric device to easily determine whether the charging device supports the charging and discharging function and/or the discharging function based on the values of the function description codes, thereby improving efficiency of performing a negotiation on the charging and discharging function and/or the discharging function.

Except for the first function description code of the charging and discharging function and/or the second function description code of the discharging function, the support function message further carries function description codes corresponding to service functions of other function modules supported by the charging device. For the function description code corresponding to the service function of each function module, the electric device determines whether the charging device supports a service function indicated by the function description code based on a value of the function description code. The electric device determines all service functions supported by the charging device and determines, in combination with the service functions supported by the electric device, whether negotiation succeeds for each function module.

For a specific function module, when the electric device determines that itself and the charging device both support the at least one service function of the function module, the electric device determines that the negotiation succeeds for the function module. When the electric device determines that the specific function module has no service function supported by both the electric device and the charging device, the electric device determines that the negotiation fails for the function module. When the negotiation fails for a predetermined affirmatively chosen item function module, the electric device determines that the current function negotiation between the electric device and the charging device fails, and transmits a function negotiation failure message to the charging device. After receiving the function negotiation failure message, the charging device determines that the function negotiation fails and exits the current charging or discharging process between the charging device and the electric device.

After the electric device confirms the service functions corresponding to all the function modules in the above manner, in response to determining that negotiation succeeds for all the affirmatively chosen item function modules, the electric device generates a negotiation confirmation result message. The negotiation confirmation result message includes a function code of a function module supported by both the electric device and the charging device and a function description code of one service function supported by both the electric device and the charging device in the function code supported by both the electric device and the charging device.

Here, for a specific function module supported by both the charging device and the electric device, when only one service function is supported by both the charging device and the electric device, the function description code of the service function is written into the negotiation confirmation result message. When a plurality of service functions is supported by both the charging device and the electric device, the electric device selects one service function from the service functions supported by both the charging device and the electric device based on a predetermined function selection policy pre-configured by the electric device, and writes a function description code of the selected service function into the negotiation confirmation result message.

For the charging and discharging function and/or the discharging function, the electric device selects a target function from the charging and discharging function and/or the discharging function when determining that both the charging device and the electric device support the charging and discharging function and/or the discharging function, and writes a function description code corresponding to the target function into the negotiation confirmation result message. In this way, the negotiation confirmation result message carries the function description code of the charging and discharging function or the function description code of the discharging function. Subsequently, the charging device may adopt the charging and discharging function to charge the battery of the electric device or switch to the discharging mode to receive a current discharged by the electric device after determining that the function negotiation is successful based on the negotiation confirmation result message, thereby providing the electric device with a functional mode required by the electric device. Therefore, the requirement of the electric device for charging and discharging or discharging the battery is met.

In some embodiments of the present disclosure, when determining that both the charging device and the electric device support the charging and discharging function, the electric device selects the charging and discharging function as the target function, and carries the first function description code of the charging and discharging function in the negotiation confirmation result message. Moreover, the value of the first function description code is a first value indicating support for the charging and discharging function.

In a case where the electric device determines that both itself and the charging device support the charging and discharging function, the electric device selects the charging and discharging function by default. In this way, subsequently, the charging device uses the charging and discharging function to charge the battery of the electric device, and the charging and discharging function is added in the discharging stage during charging, which can effectually decrease the lithium precipitation amount generated during charging of the battery, thereby enhancing the charging safety of the battery, and prolonging the service life of the battery.

In some other embodiments, in the case where the electric device determines that both itself and the charging device support the charging and discharging function, the electric device first detects the current battery power, compares the battery power with the predetermined threshold. When determining that the battery power is lower than the predetermined threshold, the electric device selects the charging and discharging function as the target function, and carries the first function description code of the charging and discharging function in the negotiation confirmation result message. When determining that the battery current is higher than the predetermined threshold, the electric device selects a service function of the power supply mode according to other function selection policies.

In a case where the electric device and the charging device both support the charging and discharging function and where the battery power of the electric device is lower than the predetermined threshold value, the first function description code of the charging and discharging function is carried in the negotiation confirmation result message. In this case, the charging and discharging function may be adopted to charge the battery of the electric device in a case where the battery power is low. In addition, the discharging stage is added in the charging and discharging function during charging, which can effectively decrease the lithium precipitation amount generated during battery charging, thereby improving the charging safety of the battery and prolonging the service life of the battery.

In some other embodiments of the present disclosure, when receiving the charging instruction and determining that both the charging device and the electric device support the charging and discharging function, the electric device selects the charging and discharging function as the target function and carries the first function description code of the charging and discharging function in the negotiation confirmation result message. When receiving the discharging instruction and determining that the charging device and the electric device both support the discharging function, the electric device selects the discharging function as the target function, and carries the second function description code of the discharging function in the negotiation confirmation result message.

The electric device receives a charging instruction or a discharging instruction transmitted by a user client, or receives a charging instruction or a discharging instruction triggered by a human-computer interaction module of the electric device. For example, the electric vehicle receives a charging instruction or a discharging instruction transmitted by a user client of a mobile phone, or receives a charging instruction or a discharging instruction triggered by the user on a central control screen of the electric vehicle. The charging instruction is used to indicate to charge the battery, and the discharging instruction is used to indicate to discharge the battery.

The charging and discharging function is selected in a case where the charging instruction is received. The discharging function is selected in a case where the discharging instruction is received. The service function is selected as user's needs, allowing the user to autonomously select the charging and discharging function or the discharging function provided by the charging device.

The electric device generates the negotiation confirmation result message in the above manner and transmits the negotiation confirmation result message to the charging device. After receiving the negotiation confirmation result message, the charging device confirms that the current function negotiation is successful, and then determines whether the negotiation confirmation result message includes a function description code for indicating support for the charging and discharging function or the discharging function. That is, the charging device determines whether the negotiation confirmation result message includes the first function description code of the charging and discharging function or the second function description code of the discharging function.

After receiving the negotiation confirmation result message, the charging device determines, based on the negotiation confirmation result message, a function module for which the negotiation succeeds and a service function selected by the electric device, and subsequently only executes the service function selected by the electric device in the function module for which the negotiation succeeds. The charging device determines whether the negotiation confirmation result message includes the first function description code or the second function description code, and determines whether to use the charging and discharging function to charge the battery of the electric device, or to switch to the discharging mode to receive the electric energy discharged by the battery of the electric device, based on the determination result.

Specifically, in the case where the charging device determines that the negotiation confirmation result message includes the first function description code for indicating support for the charging and discharging function, the charging device subsequently charges the battery of the electric device by using the charging and discharging function. When the charging device determines that the negotiation confirmation result message includes the second function description code for indicating support for the discharging function, the charging device subsequently switches to the discharging mode, the electric device controls the battery to discharge electric energy to the charging device, and the charging device receives the current released by the battery of the electric device in the discharging mode.

The charging and discharging function is determined, by means of the function negotiation confirmation, to be used to charge the battery of the electric device, which can effectively decrease the lithium precipitation amount during the charging of the battery, improve the charging safety of battery, and prolong the service life of the battery. In the application scenario of determining to discharge the battery by means of function negotiation, the charging device switches to the discharging mode and receives the current released by the battery, which facilitates the rapid discharge of the battery. Moreover, an electric energy released during the charging of the battery by using the charging and discharging function or the received electric energy that is released by the battery by using the discharging function can both be fed back to the power grid or stored in the energy storage element of the charging device, which can avoid the case of wastage caused by releasing the electric energy.

During the function negotiation, when the charging device transmits the support function message to the electric device, timing is started. When a timing duration exceeds a first predetermined duration, the charging device still doesn't receive a negotiation confirmation result message returned by the electric device, then the charging device determines a function negotiation timeout, and transmits an abort message to the electric device, and exit the current communication process.

When receiving the support function message transmitted by the charging device, the electric device also starts timing. When the timing duration exceeds a second predetermined duration, confirmation for each function module in the support function message is still not completed, then the electric device determines the function negotiation timeout, transmits the abort message to the charging device, and exits the current communication process.

When the electric device and the charging device have completed the function negotiation process without timeout, and when the charging device determines that the current function negotiation is successful based on the negotiation confirmation result returned by the electric device, the negotiated function modules and the corresponding service functions are performed in a negotiation result sequence.

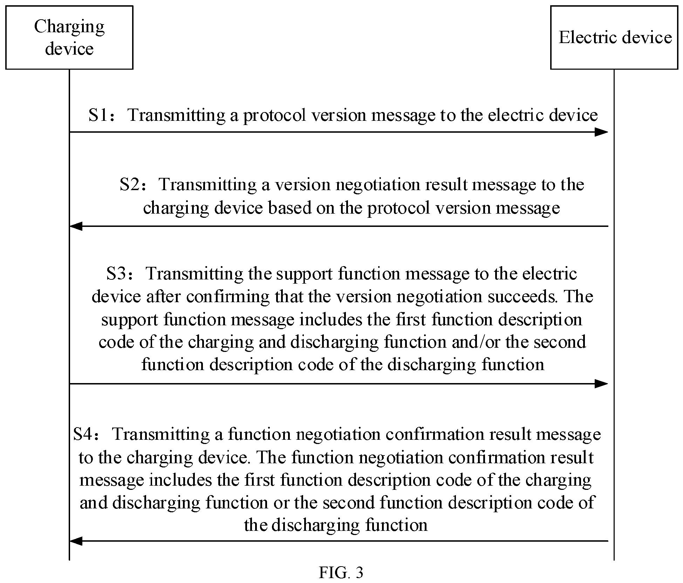

As an example, after the electric device is connected to the charging device, the version negotiation is first performed. As shown in FIG. 3, at block S1, the charging device transmits a protocol version message to the electric device. At block S2, the electric device transmits a version negotiation result message to the charging device based on the protocol version message. At block S3, after confirming that the version negotiation succeeds based on the version negotiation result message, the charging device performs the function negotiation process in this embodiment of the present disclosure and transmits the support function message to the electric device. The support function message includes the first function description code of the charging and discharging function and/or the second function description code of the discharging function. At block S4, the electric device receives the support function message and transmits a function negotiation confirmation result message to the charging device based on the support function message. The function negotiation confirmation result message includes the first function description code of the charging and discharging function or the second function description code of the discharging function.

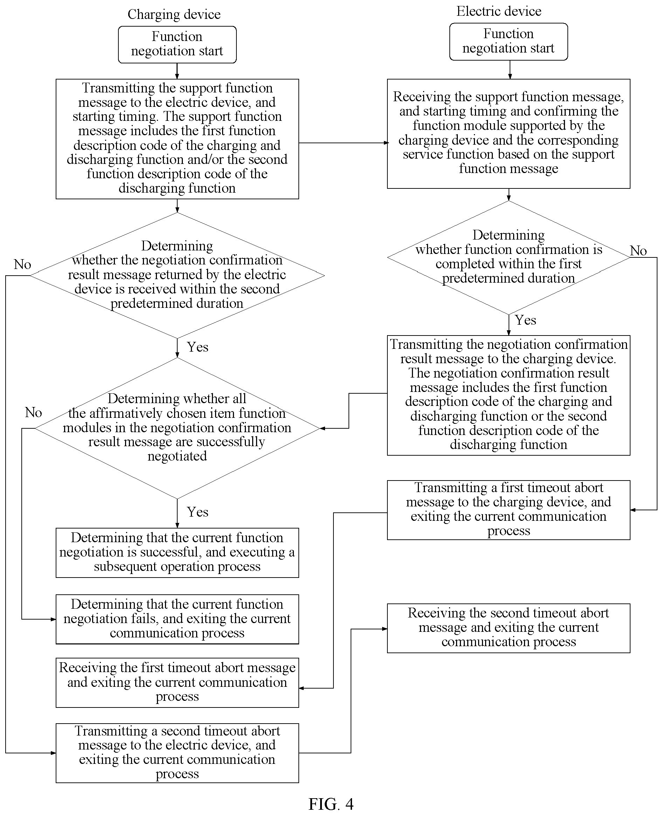

FIG. 4 shows a specific signaling interaction process for a function negotiation between a charging device and an electric device. As shown in FIG. 4, the charging device transmits the support function message to the electric device, and starts timing. The support function message includes the first function description code of the charging and discharging function and/or the second function description code of the discharging function. The electric device receives the support function message, and starts timing and confirms the function module supported by the charging device and the corresponding service function based on the support function message. The electric device determines whether function confirmation is completed within the first predetermined duration. When the function confirmation is completed within the first predetermined duration, the electric device transmits the negotiation confirmation result message to the charging device. The negotiation confirmation result message includes the first function description code of the charging and discharging function or the second function description code of the discharging function. When the electric device does not complete the function confirmation within the first predetermined duration, the electric device transmits a first timeout abort message to the charging device, and exits the current communication process. The charging device receives the first timeout abort message and exits the current communication process. The charging device determines whether the negotiation confirmation result message returned by the electrical device is received within the second predetermined duration. When no negotiation confirmation result message returned by the electrical device is received within the second predetermined duration, the charging device transmits a second timeout abort message to the electric device, and exits the current communication process. The charging device receives the second timeout abort message and exits the current communication process. When the charging device receives the negotiation confirmation result message within the second predetermined duration, the charging device determines whether negotiation succeeds for all the affirmatively chosen item function modules in the negotiation confirmation result message. When negotiation succeeds for all the affirmatively chosen item function modules in the negotiation confirmation result message, the charging device determines that the current function negotiation is successful, and executes a subsequent operation process. When no negotiation succeeds for all the affirmatively chosen item function modules in the negotiation confirmation result message, the charging device determines that the current function negotiation fails, and exits the current communication process.

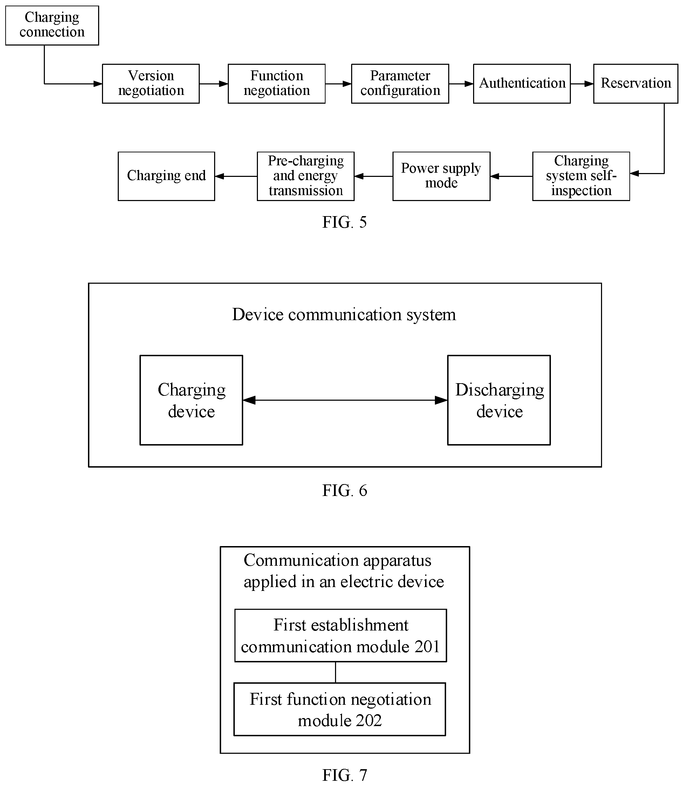

As shown in FIG. 5, after the function negotiation is successful, a parameter configuration stage is performed. In the parameter configuration stage, the electric device performs basic charging parameter interaction with the charging device. When in the function negotiation process, it is confirmed that the battery is charged by using the charging and discharging function, then in the parameter configuration stage, the electric device may transmit a request charging current, a request charging voltage, a request discharge current, a request discharge voltage, and other parameters to the charging device. After the parameter configuration stage is completed, the authentication function module, the reservation function module, the charging-system self-inspection function module, the power supply mode function module, the pre-charging and energy transmission function module, and the charging end function module are executed in the negotiation result sequence of the function negotiation. Based on the function negotiation confirmation result message including the first function description code of the charging and discharging function, the charging and discharging function or the discharging function is performed in the power supply mode function module; or, based on the function negotiation confirmation result message including the second function description code of the discharging function, the discharging function is performed in the power supply mode function module.

In this embodiment of the present disclosure, the negotiation on the charging and discharging function and/or the discharging function is added in the function negotiation process of the charging device and the discharging device. The battery is charged, discharged, or alternately charged and discharged by using the function that is negotiated consistently by the electric device and the charging device, which can satisfy the requirement of the electric device for charging or discharging the battery in various application scenarios. Moreover, it can be realized that the charging device uses the charging and discharging function to charge the battery, which decreases the lithium precipitation amount in the charging of the battery, enhances the charging safety of the battery, and prolongs the service life of the battery. In addition, it is also possible to achieve that the charging device receives the electric energy discharged by the battery of the electric device, which helps rapid discharging of the battery. Moreover, the power released by the battery may be returned to the power grid, or stored in the energy storage element of the charging device, thereby avoiding the waste of electric energy.

In order to facilitate understanding of the device communication method provided in the embodiments of the present disclosure, the following descriptions are provided in conjunction with a specific example. In this specific example, the electric device is the electric vehicle, and the charging device is the charging pile. The communication process between the electric vehicle and the charging pile is composed of a plurality of function modules in sequence, as shown in FIG. 5. After the electric vehicle is connected to the charging pile in a charging manner, both the electric vehicle and the charging pile perform a version negotiation of the communication protocol. After the version negotiation is passed, the function negotiation is performed according to the device communication method provided in this embodiment of the present disclosure. During the function negotiation, the authentication function module, reservation function module, charging-system self-inspection function module, power supply mode function module, pre-charging and energy transmission function module, and charging end function module as shown in FIG. 5 and the service functions included in the function modules are confirmed. In this embodiment of the present disclosure, the service function corresponding to the power supply mode further includes the charging and discharging function and/or the discharging function, other than a charging function of existing continuous charging.

The function negotiation process is initiated by the charging pile, and the charging pile transmits the support function message to the electric vehicle. A data content of the support function message may be shown in Table 4. The first function description code of the charging and discharging function and/or the second function description code of the discharging function may be added at 8 bytes between serial numbers 26 to 33.

**Table 4**

| Serial number | Parameter content | Length |
|---|---|---|
| 1 | Parameter group identification | 1 byte |
| 2-9 | A support condition of the charging pile for a function description code of the authentication function module | 8 bytes |
| 10-17 | A support condition of the charging pile for a function description code of the reservation function module | 8 bytes |
| 18-25 | A support condition of the charging pile for a function description code of the charging-system self-inspection function module | 8 bytes |
| 26-33 | A support condition of the charging pile for a function description code of the power supply mode function module | 8 bytes |
| 34-41 | A support condition of the charging pile for a function description code of the pre-charging and energy transmission function module | 8 bytes |
| 42-49 | A support condition of the charging pile for a function description code of the charging end function module | 8 bytes |

After the charging pile transmits the support function message to the electric vehicle, the electric vehicle selects a function module supported by itself and a function description code of a corresponding service function from a function module supported by the charging pile and a corresponding service function based on the support function message. When the electric vehicle and the charging pile jointly support a plurality of service functions on a specific function module, one service function is selected from the plurality of service functions by the electric vehicle according to its own policy. The electric vehicle writes a function description code of the selected service function into the negotiation confirmation result message.

For example, for the power supply mode module, it is assumed that the charging pile supports the charging function, the charging and discharging function, and the discharging function, the function description codes of the three service functions that are respectively the charging function, the charging and discharging function, and the discharging function are carried at the 8 bytes between the serial numbers 26 to 33 in the support function message. When the electric vehicle also supports the three functions, the electric vehicle may make a choose as its own policy. When the policy of the electric vehicle is to preferentially select and use the charging and discharging function in a case where the battery needs to be charged and the charging pile supports the charging and discharging function, the electric vehicle may select the charging and discharging function and write the function description code of the charging and discharging function into the negotiation confirmation result message.

The electric vehicle returns the negotiation confirmation result message generated based on the support function message to the charging pile, and a data content of the negotiation confirmation result message is shown in Table 5. When the electric vehicle selects the charging and discharging function or the discharging function, the electric vehicle writes the first function description code of the charging and discharging function or the second function description code of the discharging function into 1 byte corresponding to a serial number 5 in Table 5 in the negotiation confirmation result message, i.e., the first function description code or the second function description code is written at the function description code of the power supply mode function module.

**Table 5**

| Serial number | Parameter content | Length |
|---|---|---|
| 1 | Parameter group identification | 1 byte |
| 2 | For the function description code of the authentication function module supported by the electric vehicle, when the electric vehicle supports it, fill in the commonly supported function description code; and when the electric vehicle does not support it, fill in 0 | 1 byte |
| 3 | For the function description code of the reservation function module supported by the electric vehicle, fill in the commonly supported function description code when the electric vehicle supports it, and fill in 0 when the electric vehicle does not support it | 1 byte |
| 4 | For the function description code of the charging system self-inspection function module supported by the electric vehicle, fill in the commonly supported function description code when the electric vehicle supports it, and fill in 0 when the electric vehicle does not support it | 1 byte |
| 5 | For the function description code of the power supply mode function module supported by the electric vehicle, fill in the commonly supported function description code when the electric vehicle supports it, and fill in 0 when the electric vehicle does not support it | 1 byte |
| 6 | For the function description code of the pre-charging and energy transmission function module supported by the electric vehicle, fill in the commonly supported function description code when the electric vehicle supports it, and fill in 0 when the electric vehicle does not support it | 1 byte |
| 7 | For the function description code of the charging end function module supported by the electric vehicle, fill in the commonly supported function description code when the electric vehicle supports it, and fill in 0 when the electric vehicle does not support it | 1 byte |

After receiving the negotiation confirmation result message returned by the electric vehicle, the charging pile determines that the current function negotiation is successful based on the negotiation confirmation result message, and performs each function module subsequent to the parameter configuration in FIG. 5 based on the function module for which negotiation succeeds and the corresponding service function. When the negotiation confirmation result message carries the first function description code of the charging and discharging function, the power supply mode function module in FIG. 5 performs the charging and discharging function to alternately charge and discharge a battery of the electric vehicle. When the negotiation confirmation result message carries the second function description code of the discharging function, the power supply mode function module in FIG. 5 performs the discharging function, the charging pile switches to the discharging mode to receive the electric energy released by the battery of the electric vehicle, and the electric energy released by the electric energy is returned to the power grid or stored in the energy storage element in the charging pile.

The negotiation on the charging and discharging function and/or the discharging function is added into the function negotiation process of the charging pile and the electric vehicle. The negotiation on the charging and discharging function and/or the discharging function can be realized without a need for modifying the communication protocol or the frame structure of the message. Through the function negotiation, it can be realized that the charging pile uses the charging and discharging function to charge the battery, which decreases the lithium precipitation amount during the battery charging, enhances the charging safety of the battery, and prolongs the service life of the battery. Alternatively, it can be realized that the charging pile receives the electric energy discharged by the battery of the electric vehicle, which facilitates the rapid discharge of the battery. Moreover, the power released by the battery may be returned to the power grid or stored in the energy storage element of the charging pile, thereby avoiding the waste of electric energy. The negotiation on the charging and discharging function and/or the discharging function is added in the function negotiation, so that the requirement of the electric vehicle for charging or discharging the battery in various application scenarios can be satisfied.

The embodiments of the present disclosure provide a device communication system. The communication system is configured to perform the device communication method provided by the above embodiments. As illustrated in FIG. 6, the system includes a charging device and a discharging device.

The charging device establishes a communication connection with an electric device and performs a function negotiation with the electric device through the communication connection. A service function negotiated of the function negotiation includes a charging and discharging function and/or a discharging function.

In the device communication system, details of the operations performed by the charging device and the electric device may refer to specific operations of the charging device and the electric device in the above method embodiments, and details thereof are omitted herein.

The device communication system provided in the aforementioned embodiments of the present disclosure and the device communication method provided in the embodiments of the present disclosure are based on a same inventive concept. The device communication system has the same advantageous effects as the method used, operated, or implemented by an application program stored on the device communication system.

The embodiments of the present disclosure provide a device communication apparatus, applied in the electric device. The apparatus is configured to perform an operation performed by the electric device in the foregoing method embodiments. As illustrated in FIG. 7, the apparatus specifically includes: a first establishment communication module 201 configured to establish a communication connection with a charging device; and a first function negotiation module 202 configured to perform a function negotiation with the charging device through the communication connection. A service function of the function negotiation includes a charging and discharging function and/or a discharging function.

The first function negotiation module 202 is configured to receive a support function message transmitted by the charging device. The support function message includes a first function description code corresponding to the charging and discharging function and/or a second function description code corresponding to the discharging function.

A reserved field of the support function message includes the first function description code and/or the second function description code.

In some other embodiments, a reserved field corresponding to a power supply mode function module in the support function message includes the first function description code and/or the second function description code.

The first function negotiation module 202 is configured to: when the support function message includes the first function description code, determine, based on a value of the first function description code being a first value, that the charging device supports the charging and discharging function; or determine, based on the value of the first function description code being a second value, that the charging device does not support the charging and discharging function; and when the support function message includes the second function description code, determine, based on a value of the second function description code being a third value, that the charging device supports the discharging function; or determine, based on the value of the second function description code being a fourth value, that the charging device does not support the discharging function.

The first function negotiation module 202 is configured to: select a target function from the charging and discharging function and/or the discharging function in response to determining that both the charging device and the electric device support the charging and discharging function and/or the discharging function; and carry, in a negotiation confirmation result message returned to the charging device, a function description code corresponding to the target function.

The first function negotiation module 202 is configured to select the charging and discharging function as the target function when both the charging device and the electric device support the charging and discharging function.

The first function negotiation module 202 is configured to: when both the charging device and the electric device support the charging and discharging function, in response to determining that battery power is lower than a predetermined threshold, select the charging and discharging function as the target function.

The first function negotiation module 202 is configured to: select the charging and discharging function as the target function in response to receiving a charging instruction and determining that both the charging device and the electric device support the charging and discharging function; and select the discharging function as the target function in response to receiving a discharging instruction and determining that both the charging device and the electric device support the discharging function.

The apparatus further includes a charging module configured to, when the negotiation confirmation result message indicates that the function negotiation is successful, charge a battery of the electric device through a charging and discharging circuit between the electric device and the charging device in response that the negotiation confirmation result message carries the first function description code; or a discharging module configured to control the battery of the electric device to discharge to the charging device in response that the negotiation confirmation result message carries the second function description code.

The first function negotiation module 202 is configured to perform function negotiation with the charging device when a version negotiation with the charging device is successful or unsuccessful.

The device communication apparatus provided in the above embodiments of the present disclosure and the device communication method provided in the embodiments of the present disclosure are based on the same inventive concept. The device communication apparatus has the same advantageous effects as the method used, operated, or implemented by the application program stored on the device communication apparatus.

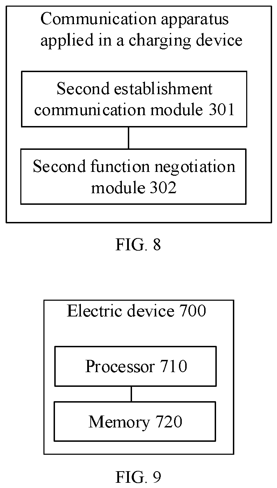

The embodiments of the present disclosure provide a device communication apparatus, applied in a charging device. The apparatus is configured to perform an operation performed by the charging device in the foregoing method embodiments. As illustrated in FIG. 8, the apparatus specifically includes: a second establishment communication module 301 configured to establish a communication connection with an electric device; and a second function negotiation module 302 configured to perform a function negotiation with the electric device through the communication connection. A service function of the function negotiation includes a charging and discharging function and/or a discharging function.

The second function negotiation module 302 is configured to transmit a support function message to the electric device. The support function message includes a first function description code corresponding to the charging and discharging function and/or a second function description code corresponding to the discharging function.

The second function negotiation module 302 is configured to add the first function description code and/or the second function description code at a reserved field of the support function message; and transmit the support function message subsequent to the adding operation to the electric device.

The second function negotiation module 302 is configured to add the first function description code and/or the second function description code at a reserved field corresponding to a power supply mode function module in the support function message.

The second function negotiation module 302 is configured to receive a negotiation confirmation result message returned by the electric device; and determine whether the negotiation confirmation result message includes a function description code for indicating support for the charging and discharging function or the discharging function in response to determining that the function negotiation is successful based on the negotiation confirmation result message.

The apparatus further includes a charging and discharging module configured to charge a battery of the electric device by using the charging and discharging function when the negotiation confirmation result message includes a first function description code for indicating support for the charging and discharging function; and a discharging module configured to switch to a discharging mode to receive a current released by the battery of the electric device when the negotiation confirmation result message includes a second function description code for indicating support for the discharging function.

The second function negotiation module 302 is further configured to perform the function negotiation with the electric device when a version negotiation with the electric device is successful or unsuccessful.

The device communication apparatus provided in the aforementioned embodiments of the present disclosure and the device communication method provided in the embodiments of the present disclosure are based on the same inventive concept. The device communication apparatus has the same advantageous effects as the method used, operated, or implemented by the application program stored on the device communication apparatus.

FIG. 9 is a schematic structural diagram of an electric device 700 according to an embodiment of the present disclosure. The electric device includes an electric vehicle, an aircraft, an electric ship, and the like. As illustrated in FIG. 9, the electric device 700 includes a processor 710. Optionally, the electric device 700 further includes a memory 720. The memory 720 stores a computer program, and the processor 710 is configured to read a computer program and perform operations performed by the electric device in the device communication method according to various embodiments of the present disclosure based on the computer program.

The embodiments of the present disclosure provide a charging device. The charging device may be a charging pile, a power bank, a charger, or the like. The charging device includes the processor. Optionally, the charging device further includes the memory. The memory stores the computer program, and the processor is configured to read the computer program and perform operations performed by the charging device in the device communication method according to various embodiments of the present disclosure based on the computer program.

The embodiments of the present disclosure provide a computer-readable storage medium, having a computer program stored thereon. The computer program, when executed by a processor, implements the method described in various embodiments of the present disclosure as mentioned above.

The embodiments of the present disclosure provide a computer program product, including a computer program. The computer program, when executed by a processor, implements the method described in various embodiments of the present disclosure as mentioned above.

It can be appreciated by those skilled in the art that units and algorithm steps in the examples described in connection to the embodiments disclosed herein can be implemented in an electronic hardware or any combination of a computer software and an electronic hardware. Whether these functions are executed by a hardware or a software depends on specific applications and design constraint conditions of the technical solutions. Those skilled in the art may use different methods for each specific application to implement the described functions, and such implementation is to be encompassed by the scope of the present disclosure.

Those skilled in the art can clearly understand that, for the convenience and conciseness of the description, for the specific operation processes of the systems, apparatuses, and units described above, reference can be made to the corresponding processes in the above method embodiments, and details thereof will be omitted here.

In the embodiments of the present disclosure, it can be appreciated that the disclosed systems, apparatuses, and methods may be implemented in other ways. For example, the apparatus embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between apparatuses or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include various mediums capable of storing program codes, such as a Universal Serial Bus flash disk, a mobile hard disk, an ROM (Read-Only Memory), an RAM (Random Access Memory), a magnetic disk, or an optical disc.

While the specific embodiments of the present disclosure have been described above, the protect scope of the present disclosure is not limited to these embodiments. Various variants and alternatives can be easily conceived by any of those skilled in the art without departing from the technical scope of the present disclosure. Therefore, these variants and alternatives are to be encompassed by the protect scope of present disclosure as defined by the claims as attached.

## Claims

1. A device communication method, applicable to an electric device, the method comprising:
establishing a communication connection with a charging device; and
performing a function negotiation with the charging device through the communication connection, a service function of the function negotiation comprising a charging and discharging function and/or a discharging function.

2. The method according to claim 1, wherein said performing the function negotiation with the charging device comprises:
receiving a support function message transmitted by the charging device, the support function message comprising a first function description code corresponding to the charging and discharging function and/or a second function description code corresponding to the discharging function.

3. The method according to claim 2, wherein a reserved field of the support function message comprises the first function description code and/or the second function description code.

4. The method according to claim 2 or 3, wherein a reserved field corresponding to a power supply mode function module in the support function message comprises the first function description code and/or the second function description code.

5. The method according to claim 2 or 3, wherein said performing the function negotiation with the charging device comprises:
when the support function message comprises the first function description code, determining, based on a value of the first function description code being a first value, that the charging device supports the charging and discharging function; or determining, based on the value of the first function description code being a second value, that the charging device does not support the charging and discharging function; and
when the support function message comprises the second function description code, determining, based on a value of the second function description code being a third value, that the charging device supports the discharging function; or determining, based on the value of the second function description code being a fourth value, that the charging device does not support the discharging function.

6. The method according to any one of claims 1 to 3, wherein said performing the function negotiation with the charging device comprises:
selecting a target function from the charging and discharging function and/or the discharging function in response to determining that both the charging device and the electric device support the charging and discharging function and/or the discharging function; and
carrying, in a negotiation confirmation result message returned to the charging device, a function description code corresponding to the target function.

7. The method according to claim 6, wherein said selecting the target function from the charging and discharging function and/or the discharging function in response to determining that both the charging device and the electric device support the charging and discharging function and/or the discharging function comprises:
selecting the charging and discharging function as the target function when both the charging device and the electric device support the charging and discharging function.

8. The method according to claim 6, wherein said selecting the target function from the charging and discharging function and/or the discharging function in response to determining that both the charging device and the electric device support the charging and discharging function and/or the discharging function comprises:
when both the charging device and the electric device support the charging and discharging function, selecting, in response to determining that battery power is lower than a predetermined threshold, the charging and discharging function as the target function.

9. The method according to claim 6, wherein said selecting the target function from the charging and discharging function and/or the discharging function in response to determining that both the charging device and the electric device support the charging and discharging function and/or the discharging function comprises:
in response to receiving a charging instruction and determining that both the charging device and the electric device support the charging and discharging function, selecting the charging and discharging function as the target function; and
in response to receiving a discharging instruction and determining that both the charging device and the electric device support the discharging function, selecting the discharging function as the target function.

10. The method according to claim 6, further comprising:
when the negotiation confirmation result message indicates that the function negotiation is successful, charging a battery of the electric device through a charging and discharging circuit between the electric device and the charging device in response to the negotiation confirmation result message carrying the first function description code; or, controlling the battery of the electric device to discharge to the charging device in response to the negotiation confirmation result message carrying the second function description code.

11. The method according to any one of claims 1 to 10, further comprising:
performing the function negotiation with the charging device when a version negotiation with the charging device is successful or unsuccessful.

12. A device communication method, applicable to a charging device, the method comprising:
establishing a communication connection with an electric device; and
performing a function negotiation with the electric device through the communication connection, a service function of the function negotiation comprising a charging and discharging function and/or a discharging function.

13. The method according to claim 12, wherein said performing the function negotiation with the electric device comprises:
transmitting a support function message to the electric device, the support function message comprising a first function description code corresponding to the charging and discharging function and/or a second function description code corresponding to the discharging function.

14. The method according to claim 13, wherein said transmitting the support function message to the electric device comprises:
adding the first function description code and/or the second function description code to a reserved field of the support function message; and
transmitting the support function message to the electric device after the adding operation.

15. The method according to claim 14, wherein said adding the first function description code and/or the second function description code to the reserved field of the support function message comprises:
adding the first function description code and/or the second function description code to a reserved field corresponding to a power supply mode function module in the support function message.

16. The method according to any one of claims 12 to 15, wherein said performing the function negotiation with the electric device comprises:
receiving a negotiation confirmation result message returned by the electric device; and
determining whether the negotiation confirmation result message comprises a function description code indicating support for the charging and discharging function or the discharging function, in response to determining that the function negotiation is successful based on the negotiation confirmation result message.

17. The method according to claim 16, further comprising:
charging a battery of the electric device using the charging and discharging function when the negotiation confirmation result message comprises a first function description code indicating support for the charging and discharging function; and
switching to a discharging mode to receive a current released by the battery of the electric device when the negotiation confirmation result message comprises a second function description code indicating support for the discharging function.

18. The method according to any one of claims 12 to 17, further comprising:
performing the function negotiation with the electric device when a version negotiation with the electric device is successful or unsuccessful.

19. A device communication system, comprising a charging device and an electric device, wherein
the charging device is configured to establish a communication connection with the electric device and perform a function negotiation with the electric device through the communication connection, a service function of the function negotiation comprising a charging and discharging function and/or a discharging function.

20. **An** electric device, comprising:
a memory;
a processor; and
a computer program stored in the memory and executable on the processor, wherein the processor, when executing the computer program, implements the method according to any one of claims 1 to 11.

21. A charging device, comprising:
a memory;
a processor; and
a computer program stored in the memory and executable on the processor, wherein the processor, when executing the computer program, implements the method according to any one of claims 12 to 18.

22. A computer-readable storage medium, having a computer program stored thereon, wherein the computer program, when executed by a processor, implements the method according to any one of claims 1 to 18.

23. A computer program product, comprising a computer program, wherein the computer program, when executed by a processor, implements the method according to any one of claims 1 to 18.
